# EUROPEAN PATENT APPLICATION

(11) **EP 4 386 895 A1**
(43) Date of publication of application: **19.06.2024**
(21) Application number: 23216099.4
(22) Date of filing: 13.12.2023
(51) Int. Cl.: H01M 4/134, H01M 4/1395, H01M 4/38, H01M 4/62, H01M 10/0525, H01M 4/04, H01M 4/133, H01M 4/1393, H01M 4/587, H01M 4/02

(54) **ACTIVE MATERIAL SECONDARY PARTICLES, NEGATIVE ELECTRODE MIXTURE, METHOD FOR PRODUCING SAME, AND SECONDARY BATTERY**

(30) Priority: 16.12.2022 JP 2022201320
(71) Applicant: TOYOTA JIDOSHA KABUSHIKI KAISHA, Toyota-shi, Aichi-ken, 471-8571 (JP)
(72) Inventor: NOMOTO, Kazushige, Toyota-shi, 471-8571 (JP)
(74) Representative: D Young & Co LLP

(57) **Abstract**

Disclosed is new technology for reducing the resistance of a secondary battery and improving the cycle characteristics. In a negative electrode of the secondary battery, predetermined active material secondary particles are used. The active material secondary particles of the present disclosure comprise a plurality of negative electrode active material particles and perfluoropolyether.

## Description

### TECHNICAL FIELD

The present application discloses active material secondary particles, a negative electrode mixture, a method for producing same, and a secondary battery.

### BACKGROUND ART

PTL 1 discloses the use of predetermined porous silicon particles as a negative electrode active material to suppress an increase in constraining pressure of batteries during charging. PTL 2 discloses making a perfluoropolyether group-containing compound exist on the surface of electrodes to improve the shelf life of the electrodes.

### CITATION LIST

### PATENT LITERATURE

[PTL 1] JP 2020-170605 A
[PTL 2] JP 2018-147887 A

### SUMMARY

### TECHNICAL PROBLEM

A negative electrode of a secondary battery can be formed by pressing a negative electrode mixture containing a negative electrode active material. If the negative electrode mixture is pressed under high pressure to increase the filling ratio of the negative electrode leading to reduction in resistance of the negative electrode, the negative electrode active material may be crushed. Meanwhile, if the negative electrode mixture is pressed under low pressure to avoid crushing of the negative electrode active material, the filling ratio of the negative electrode decreases and the resistance of the negative electrode is likely to increase.

During charging and discharging of the secondary battery, the negative electrode active material occludes or releases carrier ions, leading to a change in volume of the negative electrode active material. This volume change of the negative electrode active material may cause voids or cracks in the negative electrode of the secondary battery, resulting in deterioration of the cycle characteristics of the secondary battery.

As mentioned above, in conventional secondary batteries, there is room for improvement with respect to the achievement of both reducing the resistance and improving the cycle characteristics.

### SOLUTION TO PROBLEM

The present application discloses, as aforementioned solution to problem, the following plurality of aspects.

### <Aspect 1>

Active material secondary particles comprising a plurality of negative electrode active material particles and perfluoropolyether.

### <Aspect 2>

The active material secondary particles according to aspect 1, wherein
the negative electrode active material particles contain Si.

### <Aspect 3>

The active material secondary particles according to aspect 1 or 2, wherein
a volume ratio of the perfluoropolyether to the total of the negative electrode active material particles and the perfluoropolyether is 2% by volume or more and 30% by volume or less.

### <Aspect 4>

The active material secondary particles according to any one of aspects 1 to 3, wherein the perfluoropolyether has a viscosity of 5 mPa•s or more and 3,000 mPa•s or less at 25°C.

### <Aspect 5>

The active material secondary particles according to any one of aspects 1 to 4, wherein
the negative electrode active material particles have a mean particle diameter of 0. 1 µm or more and 5.0 µm or less, and
the active material secondary particles have a mean particle diameter of 0.5 µm or more and 20.0 µm or less.

### <Aspect 6>

A negative electrode mixture comprising at least the active material secondary particles according to any one of aspects 1 to 5, and a solid electrolyte.

### <Aspect 7>

A method for producing active material secondary particles, the method comprising
mixing a plurality of negative electrode active material particles and perfluoropolyether to bond the plurality of negative electrode active material particles to each other via the perfluoropolyether.

### <Aspect 8>

A method for producing a negative electrode mixture, the method comprising
mixing the active material secondary particles according to any one of aspects 1 to 5 and a solid electrolyte.

### <Aspect 9>

A secondary battery comprising a negative electrode, an electrolyte layer and a positive electrode, wherein
the negative electrode comprises the active material secondary particles according to any one of aspects 1 to 5.

### ADVANTAGEOUS EFFECTS OF INVENTION

When a secondary battery is formed using active material secondary particles of the present disclosure, it becomes easier for the secondary battery to have low resistance and excellent cycle characteristics.

### BRIEF DESCRIPTION OF DRAWINGS

FIG. 1 schematically shows an example of a configuration of an active material secondary particle.
FIG. 2 schematically shows an example of a configuration of a secondary battery.

### DESCRIPTION OF EMBODIMENTS

Embodiments of the technology of the present disclosure will be described below, but the technology of the present disclosure is not limited to the following embodiments.

### 1. Active Material Secondary Particle

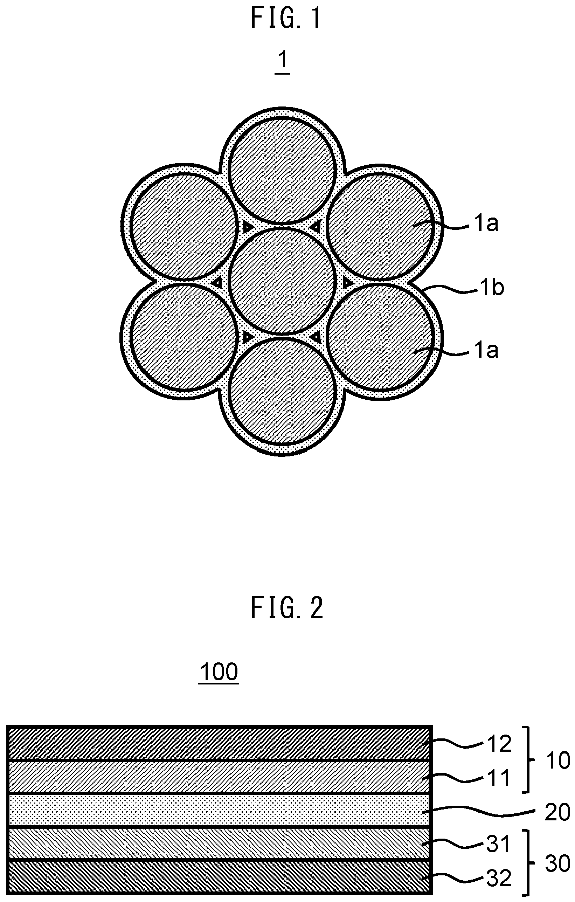

As shown in FIG. 1, an active material secondary particle 1 according to one embodiment includes a plurality of negative electrode active material particles 1a and perfluoropolyether 1b. In the active material secondary particle 1, for example, as shown in FIG. 1, the plurality of negative electrode active material particles 1a are connected to each other via perfluoropolyether 1b.

During charging and discharging of a secondary battery, a negative electrode active material occludes or releases carrier ions, leading to a change in volume of the negative electrode active material. Excessive volume change of the negative electrode active material may cause voids or cracks in the negative electrode, which may adversely affect the cycle characteristics of the secondary battery. In contrast, as mentioned above, the active material secondary particle 1 of the present disclosure includes perfluoropolyether 1b together with a plurality of negative electrode active material particles 1a, and as shown in FIG. 1, the plurality of negative electrode active material particles 1a can be connected to each other via perfluoropolyether 1b. In the active material secondary particle 1, voids can exist between the plurality of negative electrode active material particles 1a, or the voids can be filled with perfluoropolyether 1b. When voids or perfluoropolyether 1b exist between the negative electrode active material particles 1a, even if the negative electrode active material particles 1a occlude carrier ions to expand, the expansion is absorbed by the voids or perfluoropolyether 1b, thus making it possible to mitigate the expansion of the secondary particle as a whole. In other words, the volume change of the secondary particle as a whole is likely to decrease. When the active material secondary particle 1 includes perfluoropolyether 1b together with the negative electrode active material particles 1a, leading to a change in volume of the negative electrode active material particle 1a, the arrangement of the negative electrode active material particles 1a in the active material secondary particle 1 is likely to change smoothly via perfluoropolyether 1b. From this point of view, the volume change of the active material secondary particle 1 as a whole tends to decrease. In addition, smooth change in arrangement of the negative electrode active material particle 1a in the active material secondary particles 1 makes it difficult for local stress concentration to occur on the negative electrode active material particle 1a, thus making it easier to suppress cracking and crushing of the negative electrode active material particles 1a. For example, even when pressure is applied to the active material secondary particle 1 by press forming, etc., the arrangement of the negative electrode active material particles 1a in the active material secondary particle 1 changes smoothly, thus making it possible to suppress cracking and crushing of the negative electrode active material particles 1a. Similarly, stress concentration due to expansion and contraction of the negative electrode active material particles 1a is also suppressed, and from this point of view, cracking and crushing of the negative electrode active material particles 1a can also be suppressed. Furthermore, by forming a secondary battery using the active material secondary particles 1, perfluoropolyether 1b is disposed in the vicinity of the negative electrode active material particles 1a even after formation of the secondary battery, and it is considered that the perfluoropolyether is less likely to inhibit ionic conduction (e.g., ionic conduction between solid electrolytes) or electronic conduction on the negative electrode of the secondary battery. Thus, the formation of a secondary battery with such active material secondary particles 1 makes it easier to improve the cycle characteristics of the secondary battery and to reduce the resistance.

### 1.1 Negative Electrode Active Material Particles

The negative electrode active material particles 1a are particles made of a substance known as the negative electrode active material of the secondary battery. It is possible to employ, as the negative electrode active material, various materials wherein a potential at which they occlude/release predetermined carrier ions (e.g., lithium ions) (charge-discharge potential) is a lower potential than that of a positive electrode active material mentioned below.

### 1.1.1 Type of Negative Electrode Active Material

The negative electrode active material constituting the negative electrode active material particles 1a may contain at least one selected from silicon-based active materials such as Si, Si alloys and silicon oxide; carbon-based active materials such as graphite and hard carbon; various oxide-based active materials such as lithium titanate; metallic lithium and lithium alloys. In particular, the performance of the secondary battery is easily enhanced when the negative electrode active material is one or both of the silicon-based active material and the carbon-based active material. The negative electrode active material may be used alone, or two or more thereof may be used in combination. As mentioned above, it is easy for the technology of the present disclosure to suppress the volume change of the active material secondary particle 1 as a whole even if the volume change of the negative electrode active material particles 1a itself during charging and discharging is large. In this regard, the technology of the present disclosure is also applicable to the case where the negative electrode active material particles 1a contains Si (e.g., silicon-based active materials mentioned above). In other words, although the volume change of the negative electrode active material particles 1a containing Si due to occlusion and release of carrier ions, as mentioned above, the volume change of the secondary particle as a whole is suppressed when the negative electrode active material particles 1a are converted into the secondary particle together with perfluoropolyether 1b. When the negative electrode active material particles 1a contains Si, its chemical composition is not particularly limited. For example, the ratio of the Si element to all elements contained in the negative electrode active material particles 1a may be 50 mol% or more, 70 mol% or more, or 90 mol% or more. In addition to the Si element, the negative electrode active material particles 1a may contain other elements, for example, alkali metal elements such as Li element and Na element. Examples of the other element include at least one element selected from alkali metal elements such as Li element and Na element, Sn element, Fe element, Co element, Ni element, Ti element, Cr element, B element, P element and the like. The negative electrode active material particles 1a may also contain impurities such as oxides. The negative electrode active material particles 1a may be either amorphous or crystalline. The crystalline phase contained in the negative electrode active material particles 1a is not particularly limited.

### 1.1.2 Particle Size

The negative electrode active material particles 1a may be either primary or secondary particles. That is, the active material secondary particle 1 may include a plurality of negative electrode active material particles 1a which are primary particles, a plurality of negative electrode active material particles 1a which are secondary particles, or a combination of negative electrode active material particles 1a which are primary particles, and negative electrode active material particles 1a which are secondary particles. The size of the negative electrode active material particles 1a is not particularly limited. For example, the mean particle diameter of the negative electrode active material particles 1a may be 10 nm or more, 30 nm or more, 50 nm or more, 0.1 µm or more, or 0.2 µm or more, and may be 20.0 µm or less, 15.0 µm or less, 10.0 µm or less, 5.0 µm or less, 3.0 µm or less, 2.0 µm or less, or 1.0 µm or less. In particular, when the mean particle diameter of the negative electrode active material particles 1a is 0.1 µm or more and 5.0 µm or less, and the mean particle diameter of the active material secondary particles 1 is 0.5 µm or more and 20.0 µm or less, higher effect is easily obtained. The mean particle diameter of the negative electrode active material particles 1a can be determined by observation using an electron microscope such as SEM, for example, it is determined as an average value of the maximum Feret diameter of each of a plurality of particles. The larger the number of samples, the better, and the number of samples is, for example, 20 or more, 50 or more, or 100 or more. The mean particle diameter of the negative electrode active material particles 1a can be appropriately adjusted, for example, by appropriately changing the production conditions or classifying the particles.

### 1.1.3 Voids

The negative electrode active material particles 1a may have voids or may be porous. When the negative electrode active material particles 1a have voids, the voids can mitigate the expansion of the negative electrode active material particle 1a as a whole during charging. There is no particular limitation on the form of the voids in the negative electrode active material particles 1a. The negative electrode active material particles 1a may be particles containing nanoporous silicon. Nanoporous silicon refers to silicon in which a plurality of pores having a pore diameter on the nanometer order (less than 1,000 nm, and preferably 100 nm or less) are present. The negative electrode active material particles 1a may be porous silicon particles with pores having a diameter of 55 nm or less. Pores having a diameter of 55 nm or less are not easily collapsed by pressing. In other words, porous silicon particles with pores having a diameter of 55 nm or less easily maintain a porous state thereof after pressing. For example, porous silicon particles (1 g) may contain 0.21 cc or more, 0.22 cc/g or more, or 0.23 cc/g or more of pores having a diameter of 55 nm or less, and may contain 0.30 cc/g or less, 0.28 cc/g or less, or 0.26 cc/g or less of pores having a diameter of 55 nm or less. The amount of pores having a diameter of 55 nm or less contained in porous silicon particles can be determined, for example, from the pore size distribution by the nitrogen gas adsorption method and DFT method.

When the negative electrode active material particles 1a are porous, the porosity is not particularly limited. For example, the porosity of the negative electrode active material particles 1a may be 1% or more, 5% or more, 10% or more, or 20% or more, and may be 80% or less, 70% or less, 60% or less, 50% or less, 40% or less, or 30% or less. The porosity of the negative electrode active material particles 1a can be determined, for example, by observation using a scanning electron microscope (SEM). The larger the number of samples, the better and is, for example, 100 or more. The porosity can be defined as the average value obtained from these samples.

### 1.1.4 Number of Particles

The number of negative electrode active material particles 1a included in one active material secondary particle 1 is not particularly limited. The number may be 2 or more, 5 or more, 10 or more, or 50 or more, and may be 1,000 or less, 500 or less, or 100 or less.

### 1.2 Perfluoropolyether (PFPE)

As mentioned above, in the active material secondary particle 1 of the present disclosure, the inclusion of perfluoropolyether 1b together with the negative electrode active material particles 1a mentioned above makes it easier to suppress the volume change of the active material secondary particle 1 as a whole during charging and discharging, and also makes it easier to suppress cracking and crushing of the negative electrode active material particles 1a. Since the perfluoropolyether 1b has an ether bond, it is considered to have high affinity to the surfaces of various battery materials, and for example, it is considered to easily stay appropriately between the negative electrode active material particles 1a. This can, for example, impart lubricity between the negative electrode active material particles 1a.

### 1.2.1 Chemical Structure

The perfluoropolyether 1b has perfluoropolyether chains, which can also impart lubricity between negative electrode active material particles 1a. For example, the perfluoropolyether 1b may be those represented by the following formula (1):

E₁-Rf₁-R^{F}-O-Rf₂-E₂ (1)

wherein, in formula (1),
Rfi and Rf₂ each independently represent a C1-16 divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C1-10 alkyl ester group, an amide group which may have one or more substituents, and an amino group which may have one or more substituents, and
R^{F} is a divalent fluoropolyether group.

In the formula (1), Rfi and Rf₂ are each independently a C1-16 divalent alkylene group which may be substituted with one or more fluorine atoms.

In one aspect, "C1-16 divalent alkylene group", in the C1-16 divalent alkylene group which may be substituted with one or more fluorine atoms, may be linear or branched, and may be preferably a linear or branched C1-6 alkylalkylene group, especially a C1-3 alkylene group, and more preferably linear C1-6 alkylene group, especially a C1-3 alkylene group.

In one aspect, "C1-16 divalent alkylene", in the C1-16 divalent alkylene group which may be substituted with one or more fluorine atoms, may be linear or branched, and may be preferably a linear or branched C1-6 fluoroalkylene group, especially a C1-3 fluoroalkylene group, specifically may be -CF₂CH₂- and -CF₂CF₂CH₂-, and more preferably a linear C1-6 perfluoroalkylene group, especially a C1-3 perluoroalkylene group, specifically may be a group selected from the group consisting of -CF₂-, -CF₂CF₂- and -CF₂CF₂CF₂-.

In the formula (1), E₁ and E₂ are each independently a monovalent group selected from the group consisting of a fluorine group, a hydrogen group, a hydroxyl group, an aldehyde group, a carboxylic acid group, a C1-10 alkyl ester group, an amide group which may have one or more substituents, and an amino group which may have one or more substituents.

The perfluoropolyether 1b has low reactivity with a sulfide solid electrolyte mentioned below. Therefore, even when the perfluoropolyether 1b is in contact with the sulfide solid electrolyte, deterioration of the ionic conductivity due to alteration or degradation of the sulfide solid electrolyte is unlikely to occur. In particular, when the perfluoropolyether 1b has a nonpolar group as a terminal group, the reaction between the perfluoropolyether 1b and the sulfide solid electrolyte is further suppressed and higher effect can be expected. In this regard, E₁ and E₂ are each independently a fluorine group, preferably. In one aspect, E₁-Rf₁ and E₂-Rf₂ may be each independently a group selected from the group consisting of -CF₃, -CF₂CF₃ and -CF₂CF₂CF₃.

In the formula (1), R^{F} is each independently in each occurrence a divalent fluoropolyether group.

R^{F} is preferably a group represented by the formula (2):

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- (2)

wherein, in the formula (2):
R^{Fa} is each independently in each occurrence a hydrogen atom, a fluorine atom or a chlorine atom,
a, b, c, d, e and f are each independently an integer of 0 to 200,
the sum of a, b, c, d, e and f is 1 or more, and
the occurrence order of the respective repeating units in parentheses with the subscript a, b, c, d, e or f is arbitrary in the formula,
however, when all R^{Fa}(s) are a hydrogen atom or a chlorine atom, at least one of a, b, c, e and f is 1 or more.

R^{Fa} is preferably a hydrogen atom or a fluorine atom, and more preferably a fluorine atom.

Preferably, a, b, c, d, e and f may be each independently an integer of 0 to 100.

The sum of a, b, c, d, e and f is preferably 5 or more, and more preferably 10 or more, and may, for example, 15 or more, or 20 or more. The sum of a, b, c, d, e and f is preferably 200 or less, more preferably 100 or less, and still more preferably 60 or less, and may be, for example, 50 or less, or 30 or less.

These repeating units may be linear or branched. For example, -(OC₆F₁₂)- may be any of -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, -(OCF₂CF₂CF₂CF(CF₃)CF₂)- and - (OCF₂CF₂CF₂CF₂CF(CF₃))-. -(OC₅F₁₀)- may be any of -(OCF₂CF₂CF₂CF₂CF₂)-, -(OCF(CF₃)CF₂CF₂CF₂)-, - (OCF₂CF(CF₃)CF₂CF₂)-, -(OCF₂CF₂CF(CF₃)CF₂)- and -(OCF₂CF₂CF₂CF(CF₃))-. -(OC₄F₈)- may be any of -(OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, -(OCF(CF₃)CF(CF₃))-, - (OCF(C₂F₅)CF₂)- and -(OCF₂CF(C₂F₅))-. -(OC₃F₆)- (i.e., when, in the formula (2), R^{Fa} is a fluorine atom) may be any of -(OCF₂CF₂CF₂)-, -(OCF(CF₃)CF₂)- and -(OCF₂CF(CF₃))-. -(OC₂F₄)- may be any of -(OCF₂CF₂)- and -(OCF(CF₃))-.

In one aspect, R^{F} may be each independently in each occurrence a group represented by any one of the following formulas (2-1) to (2-5):

-(OC₃F₆)_{d}-(OC₂F₄)ₑ- (2-1)

wherein, in the formula (2-1),
d is an integer of 1 to 200, and
e is 0 or 1;

-(OC₄F₈)_{c}-(OC₃F₆)_{d}-(OC₂F₄)ₑ-(OCF₂)_{f}- (2-2)

wherein, in the formula (2-2),
c and d are each independently an integer of 0 or more and 30 or less,
e and f are each independently integer of 1 or more and 200 or less,
the sum of c, d, e and f is 2 or more, and
the occurrence order of the respective repeating units in parentheses with the subscript c, d, e or f is arbitrary in the formula;

-(R⁶-R⁷)_{g}- (2-3)

wherein, in the formula (2-3),
R⁶ is OCF₂ or OC₂F₄,
R⁷ is a group selected from OC₂F₄, OC₃F₆, OC₄F₈, OC₅F₁₀ and OC₆F₁₂, or a combination of two or three groups selected from these groups, and
g is an integer of 2 to 100;

-(OC6F₁₂)ₐ-(OC5F₁₀)_{b}-(OC4F₈)_{c}-(OC3F₆)_{d}-(OC2F₄)ₑ-(OCF₂)_{f}- (2-4)

wherein, in the formula (2-4),
e is an integer of 1 or more and 200 or less,
a, b, c, d and f are each independently an integer of 0 or more and 200 or less, and
the occurrence order of the respective repeating units in parentheses with the subscript a, b, c, d, e or f is arbitrary in the formula; and

-(OC6F₁₂)ₐ-(OC5F₁₀)_{b}-(OC4F₈)_{c}-(OC3F₆)_{d}-(OC2F₄)ₑ-(OCF₂)_{f}- (2-5)

wherein, in the formula (2-5),
f is an integer of 1 or more and 200 or less,
a, b, c, d and e are each independently an integer of 0 or more and 200 or less, and the occurrence order of the respective repeating units in parentheses with the subscript a, b, c, d, e or f is arbitrary in the formula.

In the formula (2-1), d is preferably 5 to 200, more preferably 10 to 100, and still more preferably 15 to 50, and is, for example, an integer of 25 to 35. The formula (2-1) is preferably a group represented by -(OCF₂CF₂CF₂)_{d}- or -(OCF(CF₃)CF₂)_{d}-, and more preferably a group represented by -(OCF₂CF₂CF₂)_{d}-. In one aspect, e is 0. In another aspect, e is 1.

In the formula (2-2), e and f are each independently, preferably 5 to 200, and more preferably an integer of 10 to 200. The sum of c, d, e and f is preferably 5 or more, and more preferably 10 or more, and may be, for example, 15 or more, or 20 or more. In one aspect, the formula (2-2) is preferably a group represented by -(OCF₂CF₂CF₂CF₂)_{c}-(OCF₂CF₂CF₂)_{d}-(OCF₂CF₂)ₑ-(OCF₂)f-. In another aspect, the formula (2-2) may be a group represented by -(OC₂F₄)ₑ-(OCF₂)f-.

In the formula (2-3), R⁶ is preferably OC₂F₄. In the formula (2-3), R⁷ is preferably a group selected from OC₂F₄, OC₃F₆ and OC₄F₈, or a combination of two or three groups selected independently from these groups, and more preferably a group selected from OC₃F₆ and OC₄F₈ Examples of the combination of two or three groups selected independently from OC₂F₄, OC₃F₆ and OC₄F₈ include, but are not particularly limited to, OC₂F₄OC₃F₆-, -OC₂F₄OC₄F₈-, - OC₃F₆OC₂F₄-, -OC₃F₆OC₃F₆-, -OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₂F₄OC₄F₈-, -OC₂F₄OC₃F₆OC₂F₄-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, -OC₃F₆OC₃F₆OC₂F₄- and - OC₄F₈OC₂F₄OC₂F₄-. In the formula (2-3), g is preferably an integer of 3 or more, and more preferably 5 or more. g is preferably an integer of 50 or less. In the formula (2-3), OC₂F₄, OC₃F₆, OC₄F₈, OC₅F₁₀ and OC₆F₁₂ may be either linear or branched, and preferably linear. In this aspect, the formula (2-3) is preferably -(OC₂F₄-OC₃F₆)_{g}- or -(OC₂F₄-OC₄F₈)_{g}-.

In the formula (2-4), e is preferably an integer of 1 or more and 100 or less, and more preferably 5 or more and 100 or less. The sum of a, b, c, d, e and f is preferably 5 or more, and more preferably 10 or more, and is, for example, 10 or more and 100 or less.

In the formula (2-5), f is preferably an integer of 1 or more and 100 or less, and more preferably 5 or more and 100 or less. The sum of a, b, c, d, e and f is preferably 5 or more, and more preferably 10 or more, and is, for example, 10 or more and 100 or less.

In one aspect, the above R^{F} is a group represented by the above formula (2-1).

In one aspect, the above R^{F} is a group represented by the above formula (2-2).

In one aspect, the above R^{F} is a group represented by the above formula (2-3).

In one aspect, the above R^{F} is a group represented by the above formula (2-4).

In one aspect, the above R^{F} is a group represented by the above formula (2-5).

In R^{F}, the ratio of e to f (hereinafter referred to as "e/f ratio") may be 0.5 to 4, preferably 0.6 to 3, more preferably 0.7 to 2, and still more preferably 0.8 to 1.4. By adjusting the e/f ratio to 4 or less, the lubricity and the chemical stability are further improved. The smaller the e/f ratio, the more the lubricity is improved. Meanwhile, by adjusting the e/f ratio to 0.5 or more, the stability of the compound can be further enhanced. The higher the e/f ratio, the more the stability of the fluoropolyether structure is improved. In this case, the value off is preferably 0.8 or more.

In one aspect, the above R^{F} may be a group represented by the following formula (2-6):

-(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}- (2-6)

wherein, in the formula (2-6),
a, b, c, d, e and f are each independently an integer of 0 to 200,
the sum of a, b, c, d, e and f is 1 or more, and
the occurrence order of the respective repeating units in parentheses with the subscript a, b, c, d, e or f is arbitrary in the formula.

In one aspect, the above R^{F} may be a group represented by the following formula (2-7):

-(OCF₂CF₂)_{d}-(OCF(CF₃))ₑ-(OCF₂)_{f}- (2-7)

wherein, in the formula (2-7),
d, e and f are each independently an integer of 0 to 200,
the sum of d, e and f is 1 or more, and
the occurrence order of the respective repeating units in parentheses with the subscript d, e or f is arbitrary in the formula.

In R^{F}, the ratio of d to f (hereinafter referred to as "d/f ratio") may be 0.5 to 4, preferably 0.6 to 3, more preferably 0.7 to 2, and still more preferably 0.8 to 1.4. By adjusting the e/f ratio to 4 or less, the lubricity and the chemical stability are further improved. The smaller the d/f ratio, the more the lubricity is improved. Meanwhile, by adjusting the d/f ratio to 0.5 or more, the stability of the compound can be further enhanced. The higher the d/f ratio, the more the stability of the fluoropolyether structure is improved. In this case, the value of f is preferably 0.8 or more.

In the fluoropolyether group-containing compound, the number-average molecular weight of the R^{F} moiety is not particularly limited, but is, for example, 500 to 30,000, preferably 1,500 to 30,000, and more preferably 2,000 to 10,000. Herein, the number-average molecular weight of R^{F} is the value measured by ¹⁹F-NMR.

### 1.2.2 Viscosity

The viscosity of the perfluoropolyether 1b is not particularly limited. In particular, when the viscosity of perfluoropolyether 1b at 25°C is 1 mPa·s or more and 5,000 mPa·s or less, especially 5 mPa·s or more and 3,000 mPa·s or less, the perfluoropolyether 1b can easily stay in the active material secondary particles 1, and higher lubricating effect is easily exerted in the active material secondary particles 1. The viscosity may be 5 mPa·s or more and 1,000 mPa·s or less. The viscosity of the perfluoropolyether 1b is the viscosity at 25°C using a B-type viscometer and can be measured in accordance with JIS K7117-1:1999.

### 1.3 Volume Ratio

The volume ratio of the negative electrode active material particles 1a and the perfluoropolyether 1b in the active material secondary particles 1 is not particularly limited, but may be such that it can maintain a certain shape as the active material secondary particle 1. For example, when the volume ratio of the perfluoropolyether 1b to the total of the negative electrode active material particles 1a and the perfluoropolyether 1b is 1% by volume or more and 50% by volume or less, especially 2% by volume or more and 30% by volume or less, it is easy to obtain the active material secondary particle 1 which has a shape maintained more appropriately as the active material secondary particle 1, and is more excellent in handleability. The volume ratio of the negative electrode active material particles 1a and the perfluoropolyether 1b in the active material secondary particle 1 can be measured, for example, as follows. That is, the volume of the active material secondary particles 1 as a whole is measured using an optical microscope or SEM. The volume of the perfluoropolyether 1b is specified in such a manner that the active secondary particles 1 are washed with a solvent (which can dissolve the perfluoropolyether 1b, but does not dissolve other negative electrode active material particles 1a) and the filtrate containing perfluoropolyether 1b dissolved therein is collected by suction filtration, etc., followed by analysis of the collected solvent by GC-MS. Alternatively, if the solvent has a significantly different boiling point from perfluoropolyether 1b, the solvent may be extracted by distillation and then the volume of the perfluoropolyether 1b may be directly measured. This makes it possible to calculate the volume ratio of the perfluoropolyether 1b and the volume ratio of the negative electrode active material particles 1a in the volume of the active material secondary particles 1 measured in advance.

### 1.4 Mass Ratio

The mass ratio of the negative electrode active material particles 1a and the perfluoropolyether 1b in the active material secondary particle 1 is not particularly limited, but may be such that it can maintain a certain shape as the active material secondary particle 1. For example, when the active material secondary particle 1 contains the perfluoropolyether 1b in the amount of 1 part by mass or more and 50 parts by mass or less, especially 10 parts by mass or more and 40 parts by mass or less, relative to 100 parts by mass of the negative electrode active material particles 1a, it is easy to obtain the active material secondary particle 1 which has a shape maintained more appropriately as the negative electrode secondary material particle 1, and is more excellent in handleability.

### 1.5 Other Matters

The active material secondary particle 1 may or may not contain any sub-components together with the negative electrode active material particles 1a and the perfluoropolyether 1b. The active material secondary particle 1 may contain, for example, 90% by mass or more and 100% by mass or less, 95% by mass or more and 100% by mass or less, or 99% by mass or more and 100% by mass or less in total of the negative electrode active material particles 1a and the perfluoropolyether 1b. The active material secondary particle 1 may be substantially composed only of the negative electrode active material particles 1a and the perfluoropolyether 1b. The active material secondary particle 1 may be free of a solid electrolyte, a conductive aid and a binder.

The mean particle diameter of the active material secondary particles 1 is not particularly limited. For example, the mean particle diameter of the active material secondary particles 1 may be 50 nm or more, 0.1 µm or more, 0.5 µm or more, 1.0 µm or more, or 2.0 µm or more, and may be 80.0 µm or less, 60.0 µm or less, 40.0 µm or less, 20.0 µm or less, or 15.0 µm or less. In particular, as mentioned above, when the mean particle diameter of the negative electrode active material particles 1a is 0.1 µm or more and 5.0 µm or less, and the mean particle diameter of the active material secondary particles 1 is 0.5 µm or more and 20.0 µm or less, higher effect is easily obtained.

### 2. Negative Electrode Mixture

As mentioned above, by applying the active material secondary particles 1 of the present disclosure to the negative electrode mixture constituting the negative electrode of a secondary battery, it is easy to obtain a secondary battery which has excellent cycle characteristics and low resistance. The negative electrode mixture can constitute the negative electrode active material layer mentioned below. The negative electrode mixture according to one embodiment may include at least the active material secondary particles 1, and a solid electrolyte. The negative electrode mixture may include at least the active material secondary particles 1, a solid electrolyte, and at least one of a conductive aid and a binder, and also may include at least the active material secondary particles 1, a solid electrolyte, a conductive aid, and a binder. The negative electrode mixture may also contain various additives and the like. For example, the negative electrode mixture may or may not contain perfluoropolyether separately from the active material secondary particles 1. The content of each component in the negative electrode mixture may be determined according to the desired battery performance. For example, the content of the active material secondary particles 1 may be 40% by mass or more, 50% by mass or more, 60% by mass or more, or 70% by mass or more, and may be less than 100%, or 90% by mass or less, based on 100% by mass of the entire negative electrode mixture. The content of the solid electrolyte may be more than 0% by mass or 10% by mass or more, and may be 60% by mass or less, 50% by mass or less, 40% by mass or less, or 30% by mass or less, based on 100% by mass of the entire negative electrode mixture. When the amount of the entire perfluoropolyether contained in the negative electrode mixture is 100% by mass, the content of the perfluoropolyether 1b constituting the active material secondary particles 1 may be 90% by mass or more, 95% by mass or more, or 99% by mass or more, and may be 100% by mass or less.

### 2.1 Negative Electrode Active Material

The negative electrode mixture includes the active material secondary particles 1. The negative electrode mixture may also contain other negative electrode active materials independent of the active material secondary particles 1. However, it is considered that the smaller the content of other active materials, the more the effect due to the technology of the present disclosure is enhanced. For example, when the amount of the entire negative electrode active material contained in the negative electrode mixture is 100% by mass, the negative electrode active material particles 1a constituting the active material secondary particles 1 may account for 90% by mass or more, 95% by mass or more, or 99% by mass or more, and 100% by mass or less.

### 2.2 Solid Electrolyte

As a solid electrolyte which can be contained in the negative electrode mixture, any known solid electrolyte for secondary batteries may be used. The solid electrolyte may be either an inorganic solid electrolyte or an organic polymer electrolyte. In particular, the inorganic solid electrolyte has excellent ion conductivity and heat resistance. Examples of the inorganic solid electrolyte include oxide solid electrolytes and sulfide solid electrolytes. Of inorganic solid electrolytes, sulfide solid electrolytes, especially sulfide solid electrolytes containing at least Li, S and P as constituent elements, have particularly high performance. Solid electrolytes may be either amorphous or crystalline. The solid electrolyte may also be particulate. The mean particle diameter (D50) of the solid electrolyte may be, for example, 10 nm or more and 10 µm or less. The mean particle diameter D50 in the present application is a particle diameter (median diameter) at a cumulative value of 50% in a particle size distribution in terms of volume by a laser diffraction scattering method. The ionic conductivity of the solid electrolyte at 25°C may be, for example, 1 × 10⁻⁴ S/cm or more, or 1 × 10⁻³ S/cm or more. The solid electrolyte may be used alone, or two or more thereof may be used in combination.

The oxide solid electrolyte may be one or more selected from lithium lanthanum zirconate, LiPON, Li_{1+X}Al_{X}Ge_{2-X}(PO₄)₃, Li-SiO-based glass, Li-Al-S-O-based glass and the like.

The sulfide solid electrolyte may be a glass-based sulfide solid electrolyte (sulfide glass), a glassceramics-based sulfide solid electrolyte, or a crystal-based sulfide solid electrolyte. Sulfide glass is amorphous. The sulfide glass may have a glass transition temperature (Tg). When the sulfide solid electrolyte has a crystalline phase, examples of the crystalline phase include a Thio-LISICON-type crystalline phase, an LGPS-type crystalline phase, and an argyrodite-type crystalline phase.

The sulfide solid electrolyte may contain, for example, Li element, X element (wherein X is at least one of P, As, Sb, Si, Ge, Sn, B, Al, Ga and In), and S element. The sulfide solid electrolyte may further contain at least one of O element and halogen element. The sulfide solid electrolyte may also contain S element as a major component of the anion element.

The sulfide solid electrolyte may be at least one selected from, for example, Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (in which m and n are a positive number, and Z is any one of Ge, Zn and Ga), Li₂S-GeS₂, Li₂S-SiS₂-Li₃PO₄ and Li₂S-SiS₂-LiₓMO_{y} (in which x and y are a positive number, and M is any one of P, Si, Ge, B, Al, Ga and In).

The composition of the sulfide solid electrolyte is not particularly limited, but includes, for example, xLi₂S·(100-x)P₂S₅ (70 ≤ x ≤ 80), yLiI·zLiBr·(100-y-z)(xLi₂S·(1-x)P₂S₅) (0.7 ≤ x ≤ 0.8, 0 ≤ y ≤ 30, 0 ≤ z ≤ 30) and the like. Alternatively, the sulfide solid electrolyte may have the composition represented by the general formula: Li₄₋ₓGe₁₋ₓPₓS₄ (0 < x < 1). In the above general formula, at least a part of Ge may be substituted with at least one of Sb, Si, Sn, B, Al, Ga, In, Ti, Zr, V and Nb. In the above general formula, at least a portion of P may be substituted with at least one of Sb, Si, Sn, B, Al, Ga, In, Ti, Zr, V and Nb. In the above general formula, a part of Li may be substituted with at least one of Na, K, Mg, Ca and Zn. In the above general formula, a portion of S may be substituted with a halogen (at least one of F, Cl, Br and I). Alternatively, the sulfide solid electrolyte may have the composition represented by Li₇₋ₐPS₆₋ₐXₐ (X is at least one of Cl, Br and I, and a is a number of 0 or more and 2 or less). a may be 0, and may be more than 0. In the latter case, a may be 0.1 or more, and may be 0.5 or more, and may be 1 or more. a may be 1.8 or less, and may be 1.5 or less.

### 2.3 Conductive Aid

Examples of the conductive aid which can be included in the negative electrode mixture include carbon materials such as vapor-phase-grown carbon fiber (VGCF), acetylene black (AB), Ketjen black (KB), carbon nanotube (CNT) and carbon nanofiber (CNF); and metallic materials such as nickel, aluminum and stainless steel. The conductive aid may be, for example, particulate or fibrous, and its size is not particularly limited. The conductive aid may be used alone, or two or more thereof may be used in combination.

### 2.4 Binder

Examples of the binder which can be included in the negative electrode mixture include butadiene rubber (BR)-based binders, butylene rubber (IIR)-based binders, acrylate-butadiene rubber (ABR)-based binders, styrene-butadiene-based rubber (SBR) binders, polyvinylidene fluoride (PVdF)-based binders, polytetrafluoroethylene (PTFE)-based binders, polyimide (PI)-based binders, polyacrylic acid-based binders and the like. The binder may be used alone, or a two or more thereof may be used in combination.

### 3. Secondary Battery

The technology of the present disclosure also has an aspect as a secondary battery including the active material secondary particles 1. As shown in FIG. 2, a secondary battery 100 according to one embodiment includes a negative electrode 10, an electrolyte layer 20 and a positive electrode 30. Here, the negative electrode 10 includes the active material secondary particles 1.

### 3.1 Negative Electrode

The negative electrode 10 may take various configurations as long as it includes the active material secondary particles 1 and can properly function as the negative electrode of the secondary battery. As shown in FIG. 2, the negative electrode 10 may include a negative electrode active material layer 11 and a negative electrode current collector 12. In this case, the negative electrode active material layer 11 can include the active material secondary particles 1.

### 3.1.1 Negative Electrode Active Material Layer

The negative electrode active material layer 11 may be those composed of the negative electrode mixture material mentioned above. The shape of the negative electrode active material layer 11 is not particularly limited, and may be, for example, in the form of a sheet with almost flat surface. The thickness of the negative electrode active material layer 11 is not particularly limited, and may be, for example, 0.1 µm or more, 1 µm or more, or 10 µm or more, and may be 2 mm or less, 1 mm or less, or 500 µm or less.

### 3.1.2 Negative Electrode Current Collector

As shown in FIG. 2, the negative electrode 10 may include a negative electrode current collector 12 which is in contact with the negative electrode active material layer 11. It is possible to employ, as the negative electrode current collector 12, any of common negative electrode current collectors for secondary batteries. The negative electrode current collector 12 may be in the form of foil, plate, mesh or perforated metal, and foamed body. The negative electrode current collector 12 may be a metal foil or metal mesh, or a carbon sheet. In particular, the metal foil is excellent in handleability or the like. The negative electrode current collector 12 may be composed of a plurality of foils or sheets. Examples of the metal constituting the negative electrode current collector 12 include Cu, Ni, Cr, Au, Pt, Ag, Al, Fe, Ti, Zn, Co, stainless steel and the like. In particular, from the viewpoint of ensuring the reduction resistance and difficulty in alloying with lithium, the negative electrode current collector 12 may contain at least one metal selected from Cu, Ni and stainless steel. The negative electrode current collector 12 may have some coating layer on its surface for the purpose of adjusting the resistance or the like. The negative electrode current collector 12 may be a metal foil or base material on which the above metals are plated or vapor-deposited. When the negative electrode current collector 12 is composed of a plurality of metal foils, it may have some layer between the plurality of metal foils. The thickness of the negative electrode current collector 12 is not particularly limited. For example, the thickness may be 0.1 µm or more, or 1 µm or more, and may be 1 mm or less, or 100 µm or less.

### 3.2 Electrolyte Layer

An electrolyte layer 20 is disposed between a negative electrode 10 and a positive electrode 30, and can function as a separator. The electrolyte layer 20 contains at least an electrolyte and may optionally contain a binder or the like. The electrolyte layer 20 may further contain various additives and the like. The content of each component in the electrolyte layer 20 is not particularly limited and may be determined according to the desired battery performance. The shape of the electrolyte layer 20 is not particularly limited, and may be, for example, in the form of a sheet with almost flat surface. The thickness of the electrolyte layer 20 is not particularly limited, and may be, for example, 0.1 µm or more, or 1 µm or more, and may be 2 mm or less, or 1 mm or less.

### 3.2.1 electrolyte

It is possible to employ, as the electrolyte contained in the electrolyte layer 20, any known electrolytes for secondary batteries. In particular, the electrolyte layer 20 containing a solid electrolyte, especially a sulfide solid electrolyte, and more especially a sulfide solid electrolytes containing at least Li, S and P as constituent elements, has high performance. Details of the solid electrolyte are described above. The type of the electrolyte contained in the electrolyte layer 20 may be the same as or different from the type of the electrolyte which can be contained in the negative electrode mixture. The electrolyte may be used alone, or two or more thereof may be used in combination.

### 3.2.2 Binder

The binder which may be contained in the electrolyte layer 20 may be selected, for example, from those exemplified as binders which can be contained in the negative electrode mixture. The type of binder contained in the electrolyte layer 20 may be the same as or different from the type of the binder which can be contained in the negative electrode mixture. The binder may be used alone, or two or more thereof may be used in combination.

### 3.3 Positive Electrode

The positive electrode 30 may take various configurations as long as it can properly function as the negative electrode of the secondary battery. As shown in FIG. 2, the positive electrode 30 may include a positive electrode active material layer 31 and a positive electrode current collector 32.

### 3.3.1 Positive Electrode Active Material Layer

The positive electrode active material layer 31 contains at least a positive electrode active material. The positive electrode active material layer 31 may optionally contain an electrolyte, a conductive aid and a binder. Furthermore, the positive electrode active material layer 31 may contain various additives and the like. The content of each component in the positive electrode active material layer 31 may be determined according to the desired battery performance. For example, the content of the positive electrode active material may be 40% by mass or more, 50% by mass or more, 60% by mass or more, or 70% by mass or more, and may be 100% or less, 95% by mass or less, or 90% by mass or less, based on 100% by mass of the total solid content of the positive electrode active material layer 31. Alternatively, 85% by volume or more, 90% by volume or more, or 95% by volume or more in total of the positive electrode active material and, optionally, an electrolyte, a conductive aid and a binder may be contained based on 100% by volume of the entire positive electrode active material layer 31, the balance being voids or other components. The shape of the positive electrode active material layer 31 is not particularly limited, and may be, for example, in the form of a sheet with almost flat surface. The thickness of the positive electrode active material layer 31 is not particularly limited, and may be, for example, 0.1 µm or more, 1 µm or more, or 10 µm or more, and may be 2 mm or less, 1 mm or less, or 500 µm or less.

As the positive electrode active material, any known positive electrode active materials for secondary batteries may be used. Of known active materials, it is possible to use, as the positive electrode active material, a material wherein a potential at which it occludes/releases predetermined carrier ions (e.g., lithium ions) (charge-discharge potential) is relatively high, and to use, as the negative electrode active material, a material wherein a potential at which it occludes/releases predetermined carrier ions is relatively low. The positive electrode active material may be, for example, at least one selected from various lithium-containing compounds, elemental sulfur and sulfur compounds and the like. Lithium-containing compounds as positive electrode active materials may be various lithium-containing oxides such as lithium cobaltate, lithium nickelate, Li_{1±α}Ni_{1/3}Co_{1/3}Mn_{1/3}O_{2±δ}, lithium manganate and spine-based lithium compounds (different element-substituted Li-Mn spinel with the composition represented by Li₁₊ₓMn_{2-x-y}M_{y}O₄ (M is one or more selected from Al, Mg, Co, Fe, Ni and Zn), etc.), lithium titanate and lithium metal phosphate (LiMPO₄, etc., where M is one or more selected from Fe, Mn, Co and Ni). In particular, when the positive electrode active material contains, as a constituent element, a lithium-containing oxide including at least Li, at least one of Ni, Co and Mn, and O, the performance of the secondary battery can be easily more enhanced. The positive electrode active material may be used alone, or two or more thereof may be used in combination.

The shape of the positive electrode active material may be any shape commonly used as the positive electrode active material of the secondary battery. For example, the positive electrode active material may be particulate. The positive electrode active material may have voids, for example, it may be either porous or hollow. The positive electrode active material may be either a primary particle or a secondary particle in which a plurality of primary particles are agglomerated. The mean particle diameter D50 of the positive electrode active material may be, for example, 1 nm or more, 5 nm or more, or 10 nm or more, and may be 500 µm or less, 100 µm or less, 50 µm or less, or 30 µm or less. The mean particle diameter D50 of the positive electrode active material is a particle diameter (median diameter) at a cumulative value of 50% in a particle size distribution in terms of volume by a laser diffraction scattering method.

A protective layer containing an ionic conductive oxide may be formed on the surface of the positive electrode active material. This makes it easier to suppress the reaction between the positive electrode active material and sulfide (e.g., sulfide solid electrolyte). Examples of ionic conductive oxides include Li₃BO₃, LiBOz, Li₂CO₃, LiAlOz, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄ and the like. The ionic conductive oxide may be those in which some elements are substituted with a doping element such as P or B. The coverage ratio (area ratio) of the protective layer to the surface of the positive electrode active material may be, for example, 70% or more, 80% or more, or 90% or more. The thickness of the protective layer may be, for example, 0.1 nm or more, 1 nm or more, and may be 100 nm or less, or 20 nm or less.

The electrolyte which can be contained in the positive electrode active material layer 31 may be a solid electrolyte, a liquid electrolyte (electrolyte solution), or a combination thereof. The positive electrode active material layer 31 may contain a solid electrolyte, especially a sulfide solid electrolyte, and more especially a sulfide solid electrolyte containing Li, S and P as constituent elements. The conductive aid which can be contained in the positive electrode active material layer 31 may be appropriately selected from those exemplified as the conductive aid which can be contained in the negative electrode mixture. The type of the conductive aid contained in the positive electrode active material layer 31 may be the same as or different from the type of conductive aid which can be contained in the negative electrode mixture. The conductive aid may be used alone, or two or more thereof may be used in combination. The binder which can be contained in the positive electrode active material layer 31 may be selected from those exemplified as the binder which can be contained in the negative electrode mixture. The type of binder contained in the positive electrode active material layer 31 may be the same as or different from the type of binder which can be contained in the negative electrode mixture. The binder may be used alone, or two or more thereof may be used in combination.

### 3.3.2 Positive Electrode Current Collector

As shown in FIG. 2, the negative electrode 30 may include a positive electrode current collector 32 which is in contact with the positive electrode active material layer 31. It is possible to employ, as the positive electrode current collector 32, any of common positive electrode current collectors for secondary batteries. The positive electrode current collector 32 may be in the form of foil, plate, mesh or perforated metal, and foamed body. The positive electrode current collector 32 may be composed of a metal foil or metal mesh. In particular, the metal foil is excellent in handleability or the like. The positive electrode current collector 32 may be composed of a plurality of foils. Examples of the metal constituting the positive electrode current collector 32 include Cu, Ni, Cr, Au, Pt, Ag, Al, Fe, Ti, Zn, Co, stainless steel and the like. In particular, from the viewpoint of ensuring the reduction resistance, the positive electrode current collector 32 may contain Al. The positive electrode current collector 32 may have some coating layer on its surface for the purpose of adjusting the resistance or the like. The positive electrode current collector 32 may be a metal foil or base material on which the above metals are plated or vapor-deposited. When the positive electrode current collector 32 is composed of a plurality of metal foils, it may have some layer between the plurality of metal foils. The thickness of the positive electrode current collector 32 is not particularly limited. For example, the thickness may be 0.1 µm or more, or 1 µm or more, and may be 1 mm or less, or 100 µm or less.

### 3.4 Other Configurations

The secondary battery 100 may be those in which each of the above components is housed inside an exterior body. It is possible to employ, as the exterior body, any known exterior bodies for batteries. A plurality of secondary batteries 100 may be optionally electrically connected and optionally stacked to form a battery assembly. In this case, the battery assembly may be housed inside a known battery casing. The secondary battery 100 may include other obvious components such as necessary terminals. Examples of the shape of the secondary battery 100 include coin-shape, laminated shape, cylindrical shape and square shape.

### 4. Method for Producing Active Material Secondary Particles

The technology of the present disclosure also has an aspect of a method for producing active material secondary particles. As shown in FIG. 1, the method for producing active material secondary particles 1 according to one embodiment comprises mixing a plurality of negative electrode active material particles 1a and perfluoropolyether 1b to bond the plurality of negative electrode active material particles 1a to each other via the perfluoropolyether 1b. The mixing of the negative electrode active material particles 1a and the perfluoropolyether 1b can be carried out using a known mixing device or the like. The mixing conditions are not particularly limited, as long as the conditions are such that the negative electrode active material particles 1a and the perfluoropolyether 1b can be converted into secondary particles. The mixing ratio (volume ratio and mass ratio) is also as mentioned above.

### 5. Method for Producing Negative Electrode Mixture

The technology of the present disclosure also has an aspect as a method for producing a negative electrode mixture. For example, the method for producing a negative electrode mixture according to one embodiment comprises mixing the active material secondary particles 1 and a solid electrolyte. As mentioned above, the negative electrode mixture may include, in addition to the active material secondary particles 1 and the solid electrolyte, a conductive aid, a binder and various additives. For example, the method for producing a negative electrode mixture may include mixing the active material secondary particles 1, a solid electrolyte, and at least one of a conductive aid and a binder, or may include mixing the active material secondary particles 1, a solid electrolyte, a conductive aid and a binder. The mixing of the active material secondary particles 1 with the solid electrolyte can be carried out using a known mixing device or the like. The mixing conditions are not particularly limited, as long as the conditions are such that each component can be uniformly mixed. The types and mixing ratios of each component are also as mentioned above.

### 6. Method for Producing Secondary Battery

The technology of the present disclosure also has an aspect of a method for producing a secondary battery. The secondary battery 100 can be produced by applying known methods. For example, it can be produced as follows. However, the method for producing a secondary battery 100 is not limited to the following method and, for example, each layer may be formed by dry molding or the like.
(1) Active material secondary particles 1 constituting a negative electrode active material layer are dispersed in a solvent to obtain a negative electrode slurry. The solvent to be used is not particularly limited, and water and various organic solvents can be used. The negative electrode slurry is coated on the surface of the negative electrode current collector or an electrolyte layer mentioned below, using a doctor blade, and then dried to form a negative electrode active material layer on the surface of the negative electrode current collector or the electrolyte layer, thus obtaining a negative electrode. Here, the negative electrode active material layer may be press-formed.
(2) A positive electrode active material constituting a positive electrode active material layer are dispersed in a solvent to obtain a positive electrode slurry. The solvent to be used is not particularly limited, and water and various organic solvents can be used. The positive electrode slurry is coated on the surface of the positive electrode current collector or an electrolyte layer mentioned below, using a doctor blade, and then dried to form a positive electrode active material layer on the surface of the positive electrode current collector or the electrolyte layer, thus obtaining a positive electrode. Here, the positive electrode active material layer may be press-formed.
(3) Each layer is stacked so as to sandwich the electrolyte layer between the negative electrode and positive electrode to obtain a laminated body including the negative electrode current collector, the negative electrode active material layer, the electrolyte layer, the positive electrode active material layer and the positive electrode current collector in this order. The electrolyte layer may, for example, be obtained by forming an electrolyte mixture containing an electrolyte and a binder, or may those obtained by press forming. Alternatively, the electrolyte layer may be transferred to the negative electrode active material layer or positive electrode active material layer mentioned above. The laminated body may be further press-formed. Other members such as terminals may be attached to the laminated body as necessary.
(4) The laminated body is housed in a battery casing, followed by sealing to obtain a secondary battery.

### 7. Method for Improving Cycle Characteristics of Secondary Battery

The technology of the present disclosure also has an aspect as a method for improving the cycle characteristics of a secondary battery. That is, the method of the present disclosure is characterized in that the cycle characteristics of a secondary battery are improved by employing the active material secondary particles 1 in the negative electrode of the secondary battery. The details of the configurations of the secondary battery and the active material secondary particles are as mentioned above.

### 8. Vehicles

As mentioned above, the secondary battery of the present disclosure has excellent cycle characteristics and low resistance. Such secondary battery can be suitably used, for example, in at least one type of vehicle selected from hybrid electric vehicles (HEV), plug-in hybrid electric vehicles (PHEV) and battery electric vehicles (BEV). That is, the technology of the present disclosure also has an aspect as a vehicle including a secondary battery, the secondary battery including a negative electrode, an electrolyte layer and a positive electrode, the negative electrode including the active material secondary particles 1. Details of the configuration of the secondary battery are as mentioned above.

### 9. Supplementation

The technology of the present disclosure may be applied not only to lithium-ion secondary batteries, but also to secondary batteries other than lithium-ion secondary batteries (e.g., sodium-ion secondary batteries). However, the technology of the present disclosure easily exert higher effect when applied to lithium-ion secondary batteries.

### EXAMPLE

The technology of the present disclosure will be described in detail below while illustrating Examples, but the technology of the present disclosure is not limited to the following Examples.

### 1. Fabrication of Positive Electrode for Pressing

A binder (PVdF), a conductive aid (VGCF), a sulfide solid electrolyte (LiI-LiBr-Li₂S-P₂S₅) and a positive electrode active material (LiNi_{0.80}Co_{0.15}Mn_{0.05}O₂) were added in an organic solvent, followed by kneading with an ultrasonic homogenizer to obtain a positive electrode mixture slurry. The positive electrode mixture slurry thus obtained was coated on an Al foil and then dried to obtain a positive electrode for pressing.

### 2. Fabrication of Negative Electrode for Pressing

A negative electrode for pressing was fabricated for each of the following cases where perfluoropolyether (PFPE) was not included when fabricating a negative electrode mixture (Comparative Examples 1 and 2); negative electrode active material particles, a solid electrolyte and PFPE were not simultaneously mixed (Comparative Examples 3 and 4, when negative electrode active material particles and PFPE were not converted into secondary particles); and negative electrode active material particles and PFPE were converted into secondary particles in advance and the secondary particles were mixed with a solid electrolyte, etc. (Examples 1 and 2). In Comparative Examples 3 and 4, and Examples 1 and 2, those having a chemical structure represented by the following formula (I) were used as PFPE. The PFPE had a viscosity of 60 mPa·s at 25°C.

F₃C-(CF₂CF₂CF₂O)ₙ-CF₃ (I)

### 2.1 Comparative Example 1

A binder (PVdF), a conductive aid (VGCF), a sulfide solid electrolyte (LiI-LiBr-Li₂S-P₂S₅) and negative electrode active material particles (porous Si particles, mean particle diameter: 0.5 µm) were added in an organic solvent, followed by kneading with an ultrasonic homogenizer to obtain a negative electrode mixture slurry. The mixing ratio of the binder, the conductive aid, the solid sulfide electrolyte and the negative electrode active material particles included in the negative electrode mixture was 2.5:5:41:51.5 (binder:conductive aid:solid sulfide electrolyte: negative electrode active material particles) by mass. The negative electrode mixture slurry thus obtained was coated on a Cu foil and then dried to obtain a positive electrode for pressing.

### 2.2 Comparative Example 2

In the same manner as in Comparative Example 1, except that graphite particles (mean particle diameter: 1.0 µm) was used as the negative electrode active material in place of the porous Si particles, a negative electrode for pressing was obtained. The mass ratio of the binder, the conductive aid, the sulfide solid electrolyte and the negative electrode active material particles included in the negative electrode mixture is the same as in Comparative Example 1.

### 2.3 Comparative Example 3

A binder (PVdF), a conductive aid (VGCF), a sulfide solid electrolyte (LiI-LiBr-Li₂S-P₂S₅), negative electrode active material particles (porous Si particles, mean particle size: 0.5 µm) and PFPE were added in an organic solvent, followed by kneading with an ultrasonic homogenizer to obtain a negative electrode mixture slurry. The mixing ratio of the binder, the conductive aid, the solid sulfide electrolyte, the negative electrode active material particles and PEFE included in the negative electrode mixture was 2:4:37:47.5:9.5 (binder:conductive aid: solid sulfide electrolyte: negative electrode active material particles:PEFE) by mass (so that 20 parts by mass of PFPE are included relative to 100 parts by mass of negative electrode active material particles in the negative electrode for pressing). The negative electrode mixture slurry thus obtained was coated on a Cu foil and then dried to obtain a positive electrode for pressing.

### 2.4 Comparative Example 4

In the same manner as in Comparative Example 3, except that graphite particles (mean particle size: 1.0 µm) was used as the negative electrode active material in place of the porous Si particles, a negative electrode for pressing was obtained. The mass ratio of the binder, the conductive aid, the sulfide solid electrolyte, the negative electrode active material particles and FEPE included in the negative electrode mixture is the same as in Comparative Example 3.

### 2.5 Example 1

### 2.5.1 Fabrication of Active Material Secondary Particles

Negative electrode active material particles (porous Si particles, mean particle size: 0.5 µm) and PFPE were mixed in a mortar to obtain active material secondary particles containing a plurality of negative electrode active material particles and PFPE. Here, 20 parts of PFPE were mixed with 100 parts of the negative electrode active material. In this case, the volume ratio of the negative electrode active material particles to the total of the negative electrode active material particles and PFPE in the active material secondary particles was 81% by volume. The mean particle size of the active material secondary particles was 8 µm.

### 2.5.2 Fabrication of Negative Electrode Mixture and Negative Electrode

A binder (PVdF), a conductive aid (VGCF), a sulfide solid electrolyte (LiI-LiBr-Li₂S-P₂S₅) and the active material secondary particles were added in an organic solvent, followed by kneading with an ultrasonic homogenizer to obtain a negative electrode mixture slurry. The mixing ratio of the binder, the conductive aid, the solid sulfide electrolyte and the active material secondary particles included in the negative electrode mixture was 2:4:37:57 (binder:conductive aid:solid sulfide electrolyte: active material secondary particles) by mass. The negative electrode mixture slurry thus obtained was coated on a Cu foil and then dried to obtain a negative electrode for pressing.

### 2.6 Example 2

In the same manner as in Example 1, except that graphite particles (mean particle size: 1.0 µm) was used as the negative electrode active material in place of the porous Si particles to fabricate active material secondary particles, thus obtaining a negative electrode for pressing. That is, the active material secondary particles contain 20 parts by mass of PFPE relative to 100 parts by mass of the negative electrode active material. In this case, the volume ratio of the negative electrode active material particles to the total of the negative electrode active material particles and PFPE in the active material secondary particles was 83% by volume. The mixing ratio of the binder, the conductive aid, the sulfide solid electrolyte and active material secondary particles included in the negative electrode mixture is the same as in Example 1. The mean particle size of the active material secondary particles was 10 µm.

### 3. Fabrication of Electrolyte Layer for Pressing

A binder (PVdF) and a sulfide solid electrolyte (LiI-LiBr-Li₂S-P₂S₅) were added in an organic solvent, followed by kneading with an ultrasonic homogenizer to obtain an electrolyte mixture slurry. The electrolyte mixture slurry thus obtained was applied on an Al foil and then dried to obtain an electrolyte layer for pressing.

### 4. Fabrication of Battery

A positive electrode, a negative electrode and an electrolyte layer for pressing are respectively formed into strips, and the mixture surface of the positive electrode for pressing and the mixture surface of the electrolyte layer for pressing were overlapped, and after roll pressing at 165°C under pressure of 50 kN/cm, an Al foil of the electrolyte layer for pressing was peeled off to obtain a laminated body (A) comprising an Al foil, a positive electrode active material layer and an electrolyte layer. Meanwhile, the mixture surface of the negative electrode for pressing and the mixture surface of the electrolyte layer for pressing were overlapped, and after roll pressing at 25°C under pressure of 50 kN/cm, an Al foil of the electrolyte layer for pressing was peeled off to obtain a laminated body (B) comprising a Cu foil, a negative electrode active material layer and an electrolyte layer. The laminated body (A) was punched in a diameter of 11.28 mm, and the laminated body (B) was punched in a diameter of 13.00 mm. The electrolyte layer was further transferred to the laminated body (B) using a uniaxial press, and then the laminated body (A) and the laminated body (B) are overlapped to obtain an electrode body having a configuration of Al foil/positive electrode active material layer/electrolyte layer/negative electrode active material layer/Cu foil. A battery for evaluation was fabricated by attaching a current extraction tab to each of the Al foil and Cu foil of the electrode body, and sealing in a laminated package using a vacuum sealer.

### 5. Evaluation of Battery Resistance

The resistance of the evaluation battery fabricated as mentioned above was measured. Specifically, the voltage of the battery was adjusted to 3.7 V, and the resistance value (initial resistance) of the battery was calculated from the voltage drop after 5 seconds when discharging at a 5 C rate.

### 6. Evaluation of Cycle Characteristics of Battery

For the evaluation battery fabricated as mentioned above, a charging/discharging test was repeated 100 times at 25°C, in which constant current charging was performed at a 2 C rate to 93% of SOC, followed by constant current discharging at a 2 C rate to 10% of SOC. The ratio C_{B}/C_{A} of the capacity C_{B} after 100 cycles to the capacity C_{A} at the first cycle was determined as the capacity retention rate.

### 7. Evaluation Results

The results are shown in Table 1 below.

**TABLE 1**

| | Mixing form of PFPE in negative electrode mixture | Negative Electrode Active material | Initial resistance (Ω) | Capacity retention rate (%) |
|---|---|---|---|---|
| Comparative Example 1 | Free from PFPE | Porous Si | 20 | 90 |
| Comparative Example 2 | Free from PFPE | Graphite | 15 | 89 |
| Comparative Example 3 | Mixed separately from active material | Porous Si | 18 | 93 |
| Comparative Example 4 | Mixed separately from active material | Graphite | 14 | 92 |
| Example 1 | Mixed as active material secondary particles | Porous Si | 16 | 99 |
| Example 2 | Mixed as active material secondary particles | Graphite | 12 | 99 |

The results shown in shown in Table 1 reveal the following.
(1) As is apparent from the results of Comparative Examples 1 and 2, and Comparative Examples 3 and 4, when PFPE was mixed together with the negative electrode active material particles, the solid electrolyte, the conductive aid and the binder to obtain a negative electrode mixture (Comparative Examples 3 and 4), the initial resistance of the secondary battery is reduced and the cycle characteristics are improved compared with the case where PFPE is not mixed (Comparative Examples 1 and 2).
(2) As is apparent from the results of Comparative Examples 3 and 4, and Examples 1 and 2, when secondary particles of negative electrode active material particles and PFPE were fabricated in advance, and then the secondary particles, the solid electrolyte and the conductive aid were mixed to obtain a negative electrode mixture (Examples 1 and 2), the initial resistance of the secondary battery is reduced and the cycle characteristics are improved compared with the case where PFPE is mixed together with the negative electrode active material particles, the solid electrolyte, the conductive additive and the binder without fabricating secondary particles in advance to obtain a negative electrode mixture (Comparative Examples 3 and 4).

The reason why the initial resistance of the secondary battery was reduced and the cycle characteristics were improved in Comparative Examples 3 and 4, and Examples 1 and 2 is considered to be as follows. In other words, by including PFPE in the negative electrode, PFPE functions as a lubricant, and when the negative electrode is pressed, the materials constituting the negative electrode mixture move (flow) smoothly and the filling rate of the negative electrode increases, leading to a reduction in resistance of the negative electrode. During charging and discharging of the secondary battery, the lubrication effect of PFPE suppresses cracking of the negative electrode active material when it expands and contracts, and the materials constituting the negative electrode mixture move (flow) smoothly, which suppresses the occurrence of voids, leading to an improvement in cycle characteristics of the secondary battery.

In particular, in Examples 1 and 2, it is considered that a plurality of negative electrode active material particles are connected to each other via perfluoropolyether, and voids exist between the plurality of negative electrode active material particles, or voids exist between the plurality of negative electrode active material particles or the voids are filled with perfluoropolyether (FIG. 1). When the perfluoropolyether and voids exist between the negative electrode active material particles, even if the negative electrode active material particles expand during charging of the secondary battery, the amount of expansion of the secondary particles as a whole is considered to be mitigated. That is, it is considered that the volume change of the secondary particles as a whole decreases. In Examples 1 and 2, when the volume of the negative electrode active material particles changes, the arrangement of the negative electrode active material particles in the active material secondary particles changes smoothly via the perfluoropolyether, thereby, the volume change of the active material secondary particles as a whole is considered to decrease. Since the arrangement of the negative electrode active material particles in the active material secondary particles changes smoothly, local stress concentration on the negative electrode active material particles is less likely to occur, and thus cracking of the negative electrode active material particles is considered to be suppressed. In Examples 1 and 2, when the negative electrode is pressed, the arrangement of the negative electrode active material particles in the active material secondary particles changed smoothly via PFPE, and the filling rate of the negative electrode increases and crushing of negative electrode material particles is considered to be suppressed. Furthermore, in Examples 1 and 2, by converting the negative electrode active material particles and PFPE into secondary particles in advance, even after the secondary battery is formed, PFPE is disposed only in the vicinity of the negative electrode active material particles, and it is considered that PFPE is less likely to inhibit ionic conduction (e.g., ionic conduction between solid electrolytes) or electronic conduction on the negative electrode of the secondary battery. It is considered that as a result of a complex combination of these effects, in Examples 1 and 2, the initial resistance of the secondary battery was significantly reduced and the cycle characteristics were significantly improved.

PFPE having a specific chemical structure was exemplified in the above Examples, but the chemical structure of PFPE is not limited thereto. Further, the case where porous Si particles and graphite particles are used as negative electrode active material particles was exemplified in the above Examples, but the types of negative electrode active material particles are not limited thereto. Further, the composition of the mixture of the positive electrode, the electrolyte layer and the negative electrode is not limited to those mentioned above.

As mentioned above, the formation of a negative electrode mixture and a secondary battery using active material secondary particles including a plurality of negative electrode active material particles and perfluoropolyether makes it easier for the secondary battery to have low resistance and excellent cycle characteristics.

### REFERENCE SIGNS LIST

1: Active material secondary particles
1a: Negative electrode active material particles
1b: Perfluoropolyether
10: Negative electrode
11: Negative electrode active material layer
12: Negative electrode current collector
20: Electrolyte layer
30: Positive electrode
31: Positive electrode active material layer
32: Positive electrode current collector
100: Secondary battery

## Claims

1. Active material secondary particles comprising
a plurality of negative electrode active material particles and
perfluoropolyether.

2. The active material secondary particles according to claim 1, wherein
the negative electrode active material particles contain Si.

3. The active material secondary particles according to claim 1 or 2, wherein
a volume ratio of the perfluoropolyether to the total of the negative electrode active material particles and the perfluoropolyether is 2% by volume or more and 30% by volume or less.

4. The active material secondary particles according to any one of claims 1 to 3, wherein
the perfluoropolyether has a viscosity of 5 mPa·s or more and 3,000 mPa·s or less at 25°C.

5. The active material secondary particles according to any one of claims 1 to 4, wherein
the negative electrode active material particles have a mean particle diameter of 0.1 µm or more and 5.0 µm or less, and
the active material secondary particles have a mean particle diameter of 0.5 µm or more and 20.0 µm or less.

6. A negative electrode mixture comprising at least the active material secondary particles according to any one of claims 1 to 5, and a solid electrolyte.

7. A method for producing active material secondary particles, the method comprising mixing a plurality of negative electrode active material particles and perfluoropolyether to bond the plurality of negative electrode active material particles to each other via the perfluoropolyether.

8. A method for producing a negative electrode mixture, the method comprising mixing the active material secondary particles according to any one of claims 1 to 5 and a solid electrolyte.

9. A secondary battery comprising a negative electrode, an electrolyte layer and a positive electrode, wherein
the negative electrode comprises the active material secondary particles according to any one of claims 1 to 5.
